# EUROPEAN PATENT SPECIFICATION

(11) **EP 4 106 532 B1**
(45) Date of publication and mention of the grant of the patent: **06.05.2026**
(21) Application number: 21705545.8
(22) Date of filing: 18.02.2021
(51) Int. Cl.: A23C 9/16, A23C 11/00, A23F 5/36

(54) **FAT BASED POWDER WITH IMPROVED RECONSTITUTION PROPERTIES**
PULVER AUF FETTBASIS MIT VERBESSERTEN REKONSTITUTIONSEIGENSCHAFTEN
POUDRE À BASE DE GRAISSE PRÉSENTANT DE MEILLEURES PROPRIÉTÉS DE RECONSTITUTION

(30) Priority: 21.02.2020 EP 20158858
(43) Date of publication of application: 28.12.2022
(73) Proprietor: Société des Produits Nestlé S.A., 1800 Vevey (CH)
(72) Inventor: ANGELOPOULOU, Diamanto, Sheffield S1 3JD (GB); FORNY, Laurent, 1000 Lausanne 26 (CH); MEUNIER, Vincent,Daniel,Maurice, 1066 Epalinges (CH); PALZER, Stefan, 1000 Lausanne 26 (CH); SALMAN, Agba, Sheffield S1 3JD (GB)
(74) Representative: Seisson, Morgan Franck
(86) International application number: PCT/EP2021/054075
(87) International publication number: WO 2021/165427

(56) References cited:
- EP-A1- 1 129 624
- EP-A1- 1 815 752
- EP-A1- 2 123 164
- EP-A1- 3 169 162
- WO-A1-2015/155024
- WO-A1-2018/091409
- US-A- 3 773 519

## Description

### Background

Powders such as whole milk or creamers that contain a large amount of fat generally exhibit bad reconstitution properties, especially at low temperatures. One of the drivers of such bad reconstitution is a bad wettability due to the presence on the surface of either solid free fat or hydrophobic compounds such as proteins.

The most common method to improve cold reconstitution (i.e. wettability) of powders containing fat is to add surface active ingredients such as lecithin on the surface of the particle (e.g. by co-spraying). However, addition of such ingredients is not always perceived by consumers as clean label.

Another way to improve cold solubility is to modify the fat composition, and use fat that exhibit a lower melting temperature. For instance, medium chain triglycerides (MCT) could be used, but again, such ingredients are not always perceived as clean label, especially in the case of dairy product or whole milk where butter fat is expected. WO 2018/091409 A1 describes soluble instant dairy creamer.

### Summary of the invention

The inventors have found a method which surprisingly improves the wettability of whole milk and creamer powders, and therefore their reconstitution, even at low temperature (below ambient down to 4°C).

Enhanced reconstitution of these dairy powders at ambient reconstitution temperatures is achieved by means of ordered dry mixing with fine crystalline powders or amorphous powders. Ordered dry mixing is the process where a powder of relatively large particle size (dairy powder) is mixed with a relatively fine one (crystalline powder). If the adhesion forces (Van der Waals and/or electrostatic forces) between the large and fine particles are greater than the gravity forces of the fine particles, the fine particles are attached onto the surface of the large ones and form a layer that appears as coating. For the adhesion forces to prevail, a size difference between the guest and carrier particles of at least one order of magnitude is required. Guest particles can be brought in contact with the host particles using mechanical forces.

The dry mixing process results in production of dairy powder particles which are partially or fully coated with the crystalline particles. Examples of suitable core materials are the WMP, SMP, powdered dairy milk replacements, whey protein isolates etc. Suitable coating materials are for example lactose, galactose, glucose and sucrose. The coating material can be crystalline or amorphous.

### Brief description of the figures

Figure 1. SEM images of pure WMP (top left), micronized α-lactose monohydrate (top right), WMP + 5% w/w micronized α-lactose monohydrate (bottom left), and WMP + 10% w/w micronized α-lactosemonohydrate (bottom right)
Figure 2. Setup used for reconstitution analysis of powders
Figure 3. Reconstitution of WMP and WMP/micronized lactose mixtures.
Figure 4. Time-lapse reconstitution images of uncoated and 10% coated WMP
Figure 5. Reconstitution time of WMP + 10% w/w anhydrous micronized α-lactosecompared to WMP + 10% w/w micronized α-lactosemonohydrate
Figure 6. SEM of WMP mixed with 10% micronized galactose
Figure 7. Reconstitution of pure WMP and WMP mixed with 10% micronized galactose
Figure 8. SEM of pure SMP and SMP mixed with 10% micronized lactose
Figure 9. Reconstitution of SMP and SMP mixed with 10% micronized lactose
Figure 10. SEM of WMP mixed with 10% spray dried lactose
Figure 11. Reconstitution of pure WMP and WMP mixed with fine spray-dried lactose
Figure 12. SEM images of pure creamer (left) and creamer + 20% micronized α-lactose monohydrate (right)
**Figure 13****.** Sinking time of uncoated and coated creamer samples
**Figure 14****.** Sinking time of WMP samples at 4°C
**Figure 15****.** Sinking time of WMP samples at 22°C
**Figure 16****.** SEM of pure vegan creamer and micronized maltodextrins
**Figure 17****.** SEM of coated powders
**Figure 18****.** Sinking time of coated and uncoated powders at 22°C
**Figure 19****.** SEM of coated powders
**Figure 20****.** Sinking time of powder

### Embodiments of the invention

The invention relates in general to a powdered composition.

The present disclosure describes a powdered beverage composition comprising a hydrophobic powder and a crystalline or amorphous powder.

The present disclosure further describes a powdered beverage composition comprising a hydrophobic powder and a crystalline or amorphous powder, wherein the hydrophobic powder and crystalline or amorphous powder are present in a mass ratio of between 75:25 and 95:5.

The present disclosure further describes a powdered beverage composition comprising a hydrophobic powder and a crystalline or amorphous powder, wherein the hydrophobic powder and crystalline or amorphous powder are present in a mass ratio of between 75:25 and 95:5, and wherein the hydrophobic powder has a D₅₀ particle size of between 50 to 500 µm.

The invention further relates to a powdered beverage composition comprising a hydrophobic powder and a crystalline or amorphous powder, wherein the hydrophobic powder and crystalline or amorphous powder are present in a mass ratio of between 75:25 and 95:5, wherein the hydrophobic powder has a D₅₀ particle size of between 50 to 500 µm, and wherein the crystalline or amorphous powder has a D₅₀ particle size of between 1 to 10 µm.

The invention relates to a powdered beverage composition comprising a hydrophobic powder and a crystalline powder, wherein the hydrophobic powder and crystalline powder are present in a mass ratio of between 75:25 and 95:5, wherein
a. the hydrophobic powder and crystalline powder are present in a mass ratio of between 75:25 and 95:5,
b. the hydrophobic powder has a D₅₀ particle size of between 50 to 500 µm;
c. the crystalline or amorphous powder has a D₅₀ particle size of between 1 to 10 µm, and wherein the crystalline powder is selected from one or more of lactose, galactose, glucose, sucrose, or derivatives thereof.

In some embodiments, the hydrophobic powder is a creamer, for example a dairy creamer. In some embodiments, the hydrophobic powder is a milk powder, for example a whole milk powder or a skimmed milk powder. The skimmed milk powder may be a medium heat skimmed milk powder. In some embodiments, the hydrophobic powder is a whey protein isolate.

In one embodiment, the free fat content of the hydrophobic powder is between 0.01 - 2% w/w.

In one embodiment, the free fat content of the hydrophobic powder is between 1- 2% w/w, or between 1.5 - 2% w/w, for example about 1.7% w/w. This is typical of the free fat content of creamer.

In one embodiment, the free fat content of the hydrophobic powder is between 1 - 1.5% w/w, for example about 1.2% w/w. This is typical of the free fat content of WMP.

In one embodiment, the free fat content of the hydrophobic powder is between 0.01 - 0.25% w/w, for example less than 0.2% w/w. This is typical of the free fat content of SMP.

In one embodiment, the hydrophobic powder further comprises lactose.

In one embodiment, the D₅₀ particle size of the hydrophobic powder is between 65 to 250 µm, or between 65 to 200 µm, or between 65 to 85 µm, or between 70 to 75 µm.

In one embodiment, the D₅₀ particle size of the hydrophobic powder is about 73 µm.

In some embodiments, the hydrophobic powder and the crystalline powder are present in a mass ratio of between 80:20 and 95:5.

In some embodiments, the hydrophobic powder and the crystalline powder are present in a mass ratio of about 90:10 or about 85:15.

In some embodiments, the crystalline powder is galactose, for example D-galactose.

In some embodiments, the crystalline powder is lactose, for example anhydrous lactose having a water content of about 1% w/w, or less.

In some embodiments, the crystalline powder is dehydrated lactose, for example α-lactose monohydrate having a water content of about 5.4% w/w, or less.

In one embodiment, the crystalline powder is micronized. In one embodiment, the crystalline powder is spray-dried.

In one embodiment, the D₅₀ particle size of the crystalline powder is between 5 to 10 µm.

In one embodiment, the D₅₀ particle size of the crystalline powder is about 6 µm.

In one embodiment, the free fat content of the hydrophobic powder is between 0.01 - 0.2% w/w, for example about 0.1% w/w, and the D₅₀ particle size of the hydrophobic powder is between 65 to 75 µm.

In one embodiment, the free fat content of the hydrophobic powder is between 1 - 2% w/w, or between 1.5 - 2% w/w, for example about 1.7% w/w, and the D₅₀ particle size of the hydrophobic powder is between 65 to 250 µm.

The particle size can be measured by dynamic image analysis. For example, the particle size can be measured by dynamic image analysis as described herein.

In one embodiment, the powdered beverage composition is a coffee mix.

In one embodiment, the powdered beverage composition does not comprise lecithin, or medium chain triglycerides.

In some embodiments, the derivative of lactose, galactose, glucose, sucrose is a saccharide derivative.

In one embodiment, the powdered beverage is for human consumption.

The present disclosure describes a method of improving reconstitution of a hydrophobic powder in water, said method comprising dry mixing a hydrophobic powder with a crystalline powder, wherein the hydrophobic powder and crystalline powder are dry-mixed in a mass ratio of between 75:25 and 99:1.

The present disclosure describes a method of improving reconstitution of a hydrophobic powder in water, said method comprising dry mixing a hydrophobic powder with a crystalline powder, wherein the hydrophobic powder and crystalline powder are dry-mixed in a mass ratio of between 75:25 and 95:5, wherein the hydrophobic powder has a D₅₀ particle size of between 50 to 500 µm.

The present disclosure describes a method of improving reconstitution of a hydrophobic powder in water, said method comprising dry mixing a hydrophobic powder with a crystalline powder, wherein the hydrophobic powder and crystalline powder are dry-mixed in a mass ratio of between 75:25 and 95:5, wherein the hydrophobic powder has a D₅₀ particle size of between 50 to 500 µm, and wherein the crystalline powder has a D₅₀ particle size of between 1 to 10 µm.

The invention further relates to a method of improving reconstitution of a hydrophobic powder in water, said method comprising dry mixing a hydrophobic powder with a crystalline powder, wherein
a. the hydrophobic powder and crystalline powder are dry-mixed in a mass ratio of between 75:25 and 95:5;
b. the hydrophobic powder has a D₅₀ particle size of between 50 to 500 µm;
c. the crystalline powder has a D₅₀ particle size of between 1 to 10 µm, wherein the crystalline powder is selected from one or more of lactose, galactose, glucose, sucrose, or derivatives thereof.

In one embodiment, the hydrophobic powder and crystalline powder are present in a mass ratio of about 90:10.

In one embodiment, the water has a temperature of less than 45°C, or less than 25°C, or less than 10°C, or less than 5°C. In one embodiment, the water has a temperature of about 22°C. In one embodiment, the water has a temperature of about 4°C.

The present disclosure describes the use of a crystalline powder for improving the cold reconstitution of hydrophobic powders, wherein the hydrophobic powder and crystalline powder are present in a powdered beverage composition in a mass ratio of between 75:25 and 95:5.

The present disclosure describes the use of a crystalline powder for improving the cold reconstitution of hydrophobic powders, wherein the hydrophobic powder and crystalline powder are present in a powdered beverage composition in a mass ratio of between 75:25 and 95:5, and wherein the hydrophobic powder has a D₅₀ particle size of between 50 to 500 µm.

The present disclosure describes the use of a crystalline powder for improving the cold reconstitution of hydrophobic powders, wherein the hydrophobic powder and crystalline powder are present in a powdered beverage composition in a mass ratio of between 75:25 and 99:1, wherein the hydrophobic powder has a D₅₀ particle size of between 50 to 500 µm, and wherein the crystalline powder has a D₅₀ particle size of between 1 to 10 µm.

In some embodiments, the derivative of lactose, galactose, glucose, sucrose is a saccharide derivative.

The invention further relates to the use of a crystalline powder for improving the cold reconstitution of hydrophobic powders, wherein
a. the hydrophobic powder and crystalline powder are present in a powdered beverage composition in a mass ratio of between 75:25 and 95:5,
b. the hydrophobic powder has a D₅₀ particle size of between 50 to 500 µm;
c. the crystalline powder has a D₅₀ particle size of between 1 to 10 µm, and comprises lactose, galactose, glucose, sucrose, or derivatives thereof.

In one embodiment, the hydrophobic powder and crystalline powder are present in a mass ratio of about 90:10.

In some embodiments, the derivative of lactose, galactose, glucose, sucrose is a saccharide derivative.

The embodiments relating to the compositions, methods and uses of the invention as described herein may be freely combined by the skilled person.

In some embodiments, the hydrophobic powder has a free fat content of between 1 - 2% w/w, and the crystalline powder is micronized α-lactose monohydrate, or the crystalline powder is anhydrous lactose, wherein the hydrophobic powder and crystalline powder are present in a ratio of about 95:5 or about 90:10, and wherein the hydrophobic powder has a d₅₀ of between 65 - 75 µm, and the d₅₀ of the micronized α-lactosemonohydrate is about 6 µm.

In some embodiments, the hydrophobic powder has a free fat content of between 1 - 2% w/w, and the crystalline powder is micronized D-galactose, wherein the hydrophobic powder and micronized D-galactose are present in a ratio of about 90:10, and wherein the d₅₀ of the micronized D-galactose is about 6 µm.

In some embodiments, the hydrophobic powder has a free fat content of between 0.01 - 0.2% w/w, and the crystalline powder is micronized α-lactosemonohydrate having a water content of about 5.4% w/w, or the crystalline powder is anhydrous lactose having a water content of about 1% w/w, wherein the hydrophobic powder and crystalline powder are present in a ratio of about 95:5 or about 90:10, and wherein the hydrophobic powder has a d₅₀ of between 65 - 75 µm.

In some embodiments, the hydrophobic powder has a free fat content of between 1 - 2% w/w, and the crystalline powder is spray-dried lactose monohydrate, wherein the hydrophobic powder and spray-dried lactose monohydrate powder are present in a ratio of about 90:10, and wherein the whole spray-dried lactose monohydrate powder has a d₅₀ of about 8 µm.

### Detailed Description

### Definitions

As used in this disclosure and the appended claims, the singular forms "a," "an" and "the" include plural referents unless the context clearly dictates otherwise.

The words "comprise," "comprises" and "comprising" are to be interpreted inclusively rather than exclusively. Likewise, the terms "include," "including" and "or" should all be construed to be inclusive, unless such a construction is clearly prohibited from the context.

Nevertheless, the compositions disclosed herein may lack any element that is not specifically disclosed. Thus, a disclosure of an embodiment using the term "comprising" includes a disclosure of embodiments "consisting essentially of and "consisting of the components identified. Similarly, the methods disclosed herein may lack any step that is not specifically disclosed herein. Thus, a disclosure of an embodiment using the term "comprising" includes a disclosure of embodiments "consisting essentially of" and "consisting of" the steps identified.

The term "and/or" used in the context of "X and/or Y" should be interpreted as "X," or "Y," or "X and Y." Where used herein, the terms "example" and "such as," particularly when followed by a listing of terms, are merely exemplary and illustrative and should not be deemed to be exclusive or comprehensive. Any embodiment disclosed herein can be combined with any other embodiment disclosed herein unless explicitly stated otherwise.

As used herein, "about" and "approximately" are understood to refer to numbers in a range of numerals, for example the range of -10% to +10% of the referenced number, preferably within -5% to +5% of the referenced number, more preferably within -1% to +1% of the referenced number, most preferably within -0.1% to +0.1 % of the referenced number.

Furthermore, all numerical ranges herein should be understood to include all integers, whole or fractions, within the range. The term "between" includes the end points of the identified range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

The D-values (D₁₀, D₅₀ & D₉₀) represent the 10%, 50% and 90% intercepts of the cumulative volume distribution of a powder. The cumulative particle size distribution is showing the percentage of particles within a sample that are equal to or smaller than a given size.

The particle size analysis was performed by dynamic image analysis using the dry dispersion unit of Camsizer XT (Retsch Technology, Germany). This method uses compressed air to disperse the particles, which then pass in front of two bright, pulsed LED light sources. The shadows of the particles are captured with two digital cameras and the particle size of each particle is measured by the software using image processing. The d₁₀, d₅₀ and d₉₀ values are then extracted, which represent the particle sizes at the 10%, 50% and 90% intercepts of the cumulative volume of the powder.

The air dispersion pressure applied in the particle size measurements was 180 kPa for all powders except for the dairy and vegan creamers (presented in Examples 6, 9 and 10), where a pressure of 60 kPa was applied in order to avoid breakage phenomena as these two powders are relatively large.

Accordingly, in one embodiment the particle size can be measured by dynamic image analysis. For example, the particle size can be measured by dynamic image analysis as described herein.

Dissolution time is the time it takes for a powder bulk to disintegrate in a solvent (e.g. water) and form solutes. When powder is added into water, a few distinctive but usually overlapping phenomena are taking place. The first one is wetting of the powder surface, followed by capillary penetration and sinking of the powder into the liquid medium. Subsequently, dispersion of the particles and disintegration of the single particles or agglomerates are taking place. In the case of powder constituents which are soluble in water, dissolution will finally occur. The whole process comprising the wetting, dispersion and dissolution is known as powder rehydration or powder reconstitution.

Mass ratio is defined as the percentage of an ingredient followed by the percentage of another ingredient in a binary mixture, such that the total percentage of said ingredients is 100 percent.

Powdered beverage composition refers to a dry powder composition that can be rehydrated using food-grade liquids such as milk or water and consumed as a beverage.

A hydrophobic powder is a food grade powder comprising fat or oil, preferably fat.

Crystalline powder consists of crystalline particles in which the atoms, molecules or ions are arranged in a highly ordered crystalline lattice. Examples of crystalline materials are crystalline sugars such as lactose, glucose, galactose and sucrose, and derivatives thereof.

Amorphous powder are materials which exhibit a disordered distribution of atoms and molecules. Examples of amorphous material are maltodextrin, spray dried lactose, and spray dried skimmed milk.

The maltodextrins are amorphous carbohydrates, often used in formulations as bulking agents. They are glucose polymers, obtained by acid or enzymatic hydrolysis of starch, and are available at different polymer chain lengths. In all glucose polymers, the molecular chain begins with a reducing sugar, comprising a free aldehyde group. Hydrolysis of the starch leads to depolymerization and presence of more reducing sugars. Dextrose equivalent (DE) is a measure of the amount of reducing sugars in a product relative to glucose (dextrose) expressed in dry-weight basis. For example, maltose (disaccharide made of two glucose monomers) has a DE of ~ 50 (since glucose has a DE of 100). In general, the higher the DE value, then the lower the molecular weight of the maltodextrin. The maltodextrins used in Examples 9 & 10 have DE values of 6 and 17-20. These DE values correspond to a number average molecular weight of approximately 3200 g/mol and 1250 g/mol, respectively. The maltodextrins were supplied from Roquette, France and were micronized using a jet mill.

Reconstitution time is the time taken to achieve 90% dissolution, meaning the time when 90% of the maximum conductivity value for each sample is reached, for example as described in Example 1.

A "micronized" powder is one which has been broken into very fine particles, typically below 20 µm. Examples of micronized powders are micronized sugars such as lactose, galactose, glucose, sucrose etc. Micronization occurs by grinding the primary particles or agglomerates using a mill e.g. ball mill or jet mill.

Milk powder is a dairy product obtained by the removal of water from milk (whole milk or skimmed milk or partly skimmed milk or cream or from a mixture of these products) where the water content does not exceed 5 % by weight of the finished product. Examples of milk powders are the whole milk powder, semi-skimmed milk powder and skimmed milk powder.

Whole milk powder is dehydrated milk containing, by weight, between 26 % and 42 % fat.

Skimmed milk powder is dehydrated milk containing, by weight, not more than 1.5 % fat.

Creamer, e.g. non-dairy creamer, is a milk powder replacement where the carbohydrate or lipidic phase is substituted, e.g. the lactose has been replaced by maltodextrin.

In one embodiment, the powdered beverage composition is a creamer and the amorphous powder is maltodextrin, preferably micronized maltodextrin, more preferably micronized maltodextrin with average molecular weight of between 1000 g/mol and 4000 g/mol. In some embodiments, the average molecular weight is about 1250 g/mol. Preferably, the maltodextrin is micronized using a jet mill.

Dehydrated α-lactose is crystalline α-lactose that has been dried in order to remove the crystallization water (monohydrate).

Saccharide derivatives are derived from sugars including monosaccharides and disaccharides. Monosaccharide derivatives may be derived from glucose or galactose e.g. D-galactose, D-glucose. Disaccharide derivatives may derive from lactose or sucrose e.g. anhydrous lactose, α-lactosemonohydrate.

A coffee mix is a coffee product comprising instant coffee, a creamer base and a sweetener base.

### EXAMPLES

### Example 1: Mixing of whole milk powder with micronized α-lactose monohydrate

WMP (from LacPatrick Dairies, Ireland) was mixed with micronized α-lactose monohydrate (Lactochem Microfine, DFE Pharma, the Netherlands) in a food processor (diameter 20 cm) comprising a custom made 45° pitched 3-blade impeller. The impeller speed was controlled with a 240 V, 7 Amps regulator (University of Sheffield). Both powders were added in the vessel before mixing and the batch size was 200 g. The mixing speed was approx. 120 rpm and the mixing time was 5 min. The ratios of WMP to micronized lactose applied were: 95/5 and 90/10 (w/w).

The particle size was measured using Camsizer^{®} XT (Retsch Technology GmbH) at 180 kPa dispersion pressure. The d-values (d₁₀, d₅₀ & d₉₀) which represent the intercepts for 10%, 50% and 90% of the cumulative volume of the two powders are presented in Table 1.

**Table 1. Size distribution of WMP and micronized α-lactose monohydrate**

| | **WMP** | **Micronized α-lactose monohydrate** |
|---|---|---|
| **d₁₀ (µm)** | 30 | 4 |
| **d₅₀ (µm)** | 74 | 6 |
| **d₉₀ (µm)** | 140 | 10 |

All samples were visualized using a benchtop SEM (JEOL, Japan). Prior to SEM visualisation, a layer of Au was deposited on the sample surface using a sputter coater (Agar Scientific, UK) to minimize charging effects. The pressure and current applied for the gold sputtering were 0.04 mb and 40 mA respectively. The sample-to-target distance was 25 mm and the deposition time was 12 s.

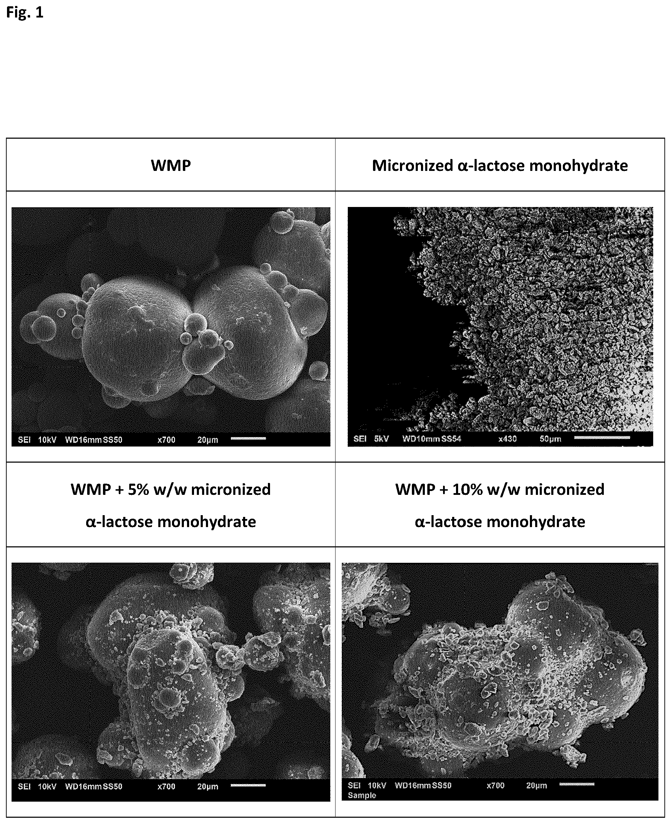

SEM images of the different samples are shown in Figure 1. Small crystalline lactose particles can be observed on the surface of WMP in the case of the WMP/micronized lactose mixtures.

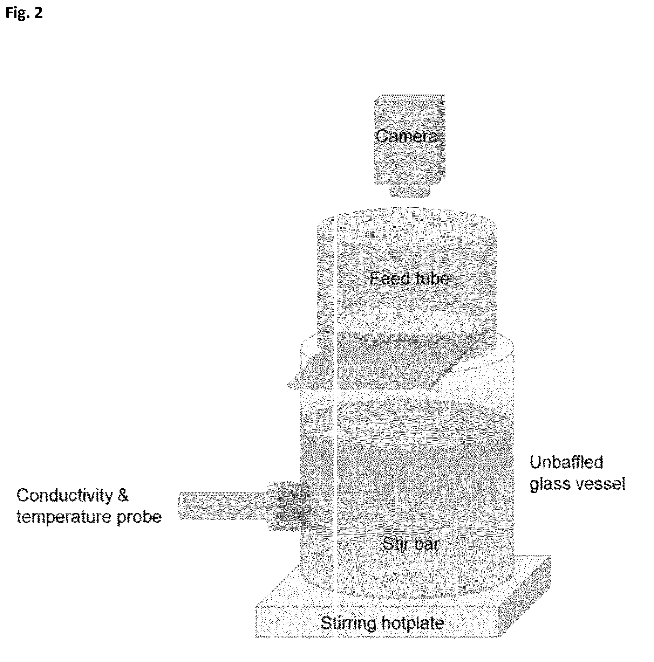

The setup used to assess the rehydration properties of the different samples is presented in Figure 2. It consists of an unbaffled glass vessel (internal diameter 7 cm) and a steel tube (internal diameter 5 cm) with a moving plate at the bottom for instant feeding of the powder. The distance between the feed tube opening and the surface of the liquid is 5 cm. In order to quantify the dissolution rate, electrical conductivity measurements were performed. For this purpose, a conductivity probe (Jenway 3540 model, k value 0.111 cm⁻¹ at 25 °C, UK) was placed vertically in the middle of the vessel using a fitting. A stirring hotplate (Dragon Lab, MS7-H550-Pro, China) was used to control the temperature and the agitation speed. A video camera (1920 x 1080 pixels, 30 fps), placed vertically on top of the vessel, was used to monitor the powder wetting and sinking steps.

For the reconstitution experiments, 200 ± 0.1 ml distilled water and 4 ± 0.01 g powder were used. The temperatures applied were 22 ± 3°C and the agitation speeds were 400 rpm and 800 rpm.

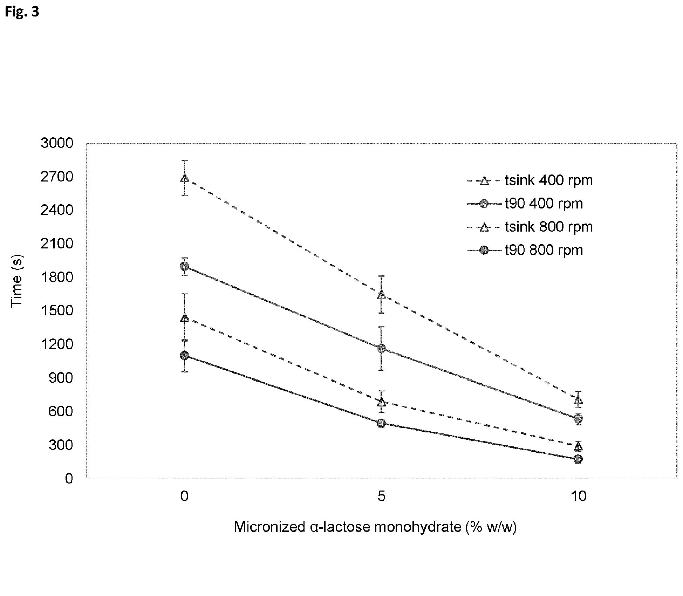

The effect of micronized lactose coating on the reconstitution of WMP are shown in Figure 3. The reconstitution results presented are the sinking time and t₉₀. Sinking time is defined as the time interval between the moment the powder is introduced on the water surface (by opening the moving plate at the bottom of the feed tube) and the moment the powder is completely submerged into the liquid. t₉₀ is the time to achieve 90% dissolution, meaning the time when 90% of the maximum conductivity value for each sample is reached. In the present example, ten individual measurements were conducted, and the error bars represent the 95% confidence interval.

Addition of micronized lactose on the surface of WMP results in significant enhancement of the powder rehydration at 22 ± 3°C (Figure 3). At both agitation rates applied, the lactose-coated powders have significantly lower t₉₀ than pure WMP. At 10% micronized lactose, t₉₀ is less than 1/3 of the initial value at 0% micronized lactose. The decrease in dissolution time is due to a faster wetting and sinking, as indicated by the triangles in Figure 3.

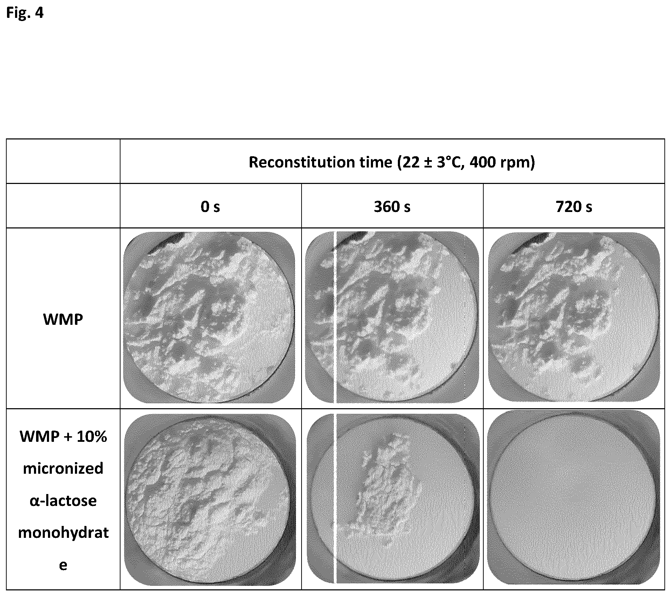

Time-lapse images extracted from the video recordings during the reconstitution experiments are presented in Figure 4. At 360 s, the percentage of the liquid surface covered by powder is notably smaller in the case of the 10% coated sample compared to pure WMP. At 720 s full sinking has been reached in the case of the coated powder, while WMP is still floating.

### Example 2: Mixing of whole milk powder with micronized anhydrous α-lactose

For the preparation of the anhydrous α-lactose, a thin layer of micronized α-lactose monohydrate was placed in the oven (Carbolite Gero) at 130°C for 2 hours. The water content of the anhydrous lactose was determined by loss on drying (MA160, Sartorius, Germany) at 150°C for 2 hours and was found to be 1% w/w (5.4% w/w in the original monohydrate sample). The powder mixing and the reconstitution analysis were performed using the same methods as in Example 1. The particle size distribution of the coated sample was the same as in Example 1.

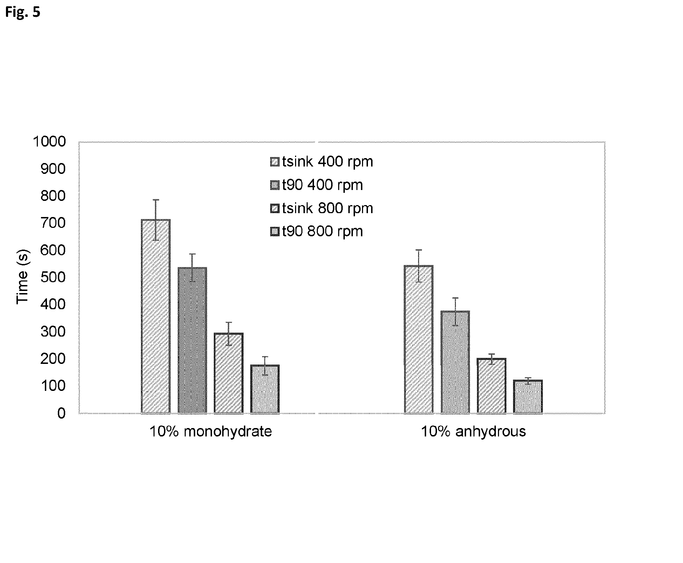

The reconstitution results presented in Figure 5 show that the anhydrous lactose coating resulted in even shorter sinking and dissolution times than the lactose monohydrate coating shown in Example 1. This is due to the higher solubility of the anhydrous α-lactose.

### Example 3: Mixing of whole milk powder with micronized galactose

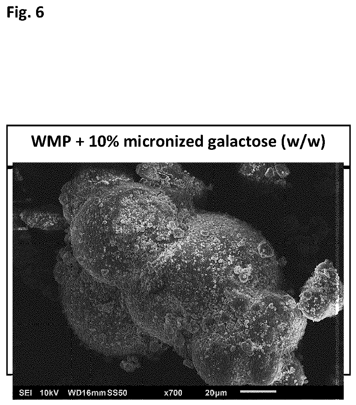

For the preparation of micronized galactose, 50 g of D-galactose powder (Beckmann-Kenko GMBH) were milled using a ball mill (Retsch, PM 100) at 400 rpm for 1 h (10 min interval). The milling was performed in a 250 ml jar with 3 grinding balls (30 mm). The particle size distribution of the micronized galactose is presented in Table 2. The surface morphology of the coated powder (SEM) is presented in Figure 6.

The powder mixing and the reconstitution analysis were performed using the same methods as in Example 1.

**Table 2. Particle size distribution of micronized D-galactose vs. micronized α-lactose monohydrate**

| | **Micronized D-galactose** |
|---|---|
| **d₁₀ (µm)** | 4 |
| **d₅₀ (µm)** | 6 |
| **d₉₀ (µm)** | 43 |

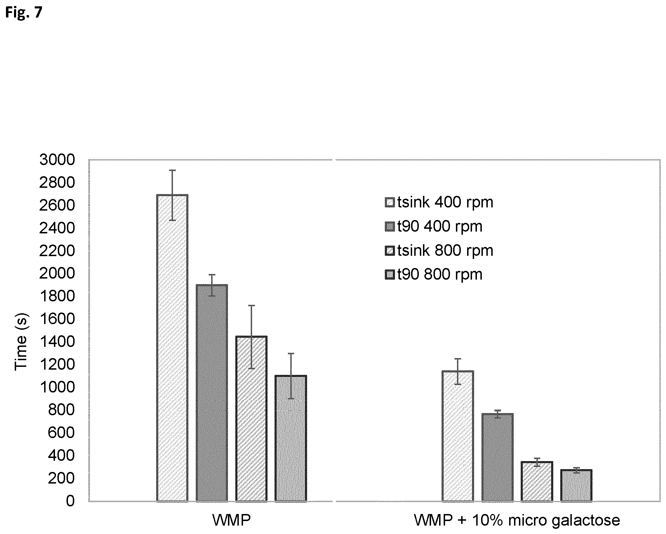

The reconstitution results obtained following the dry mixing of WMP with micronized galactose are presented in Figure 7. Significant enhancement in the reconstitution of WMP as a result of the galactose coating can be observed.

### Example 4: Mixing of skimmed milk powder with micronized α-lactose monohydrate

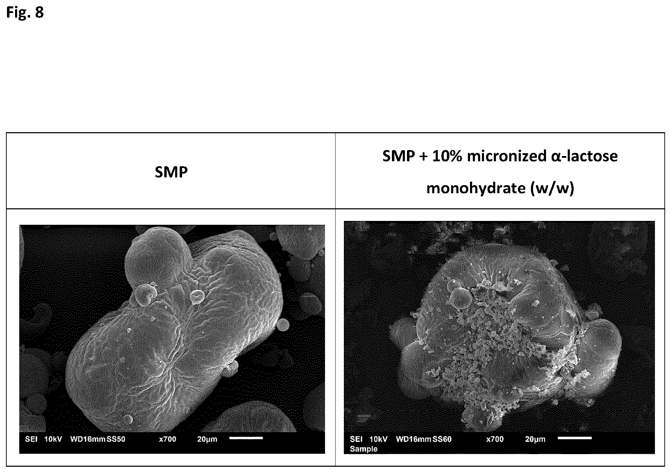

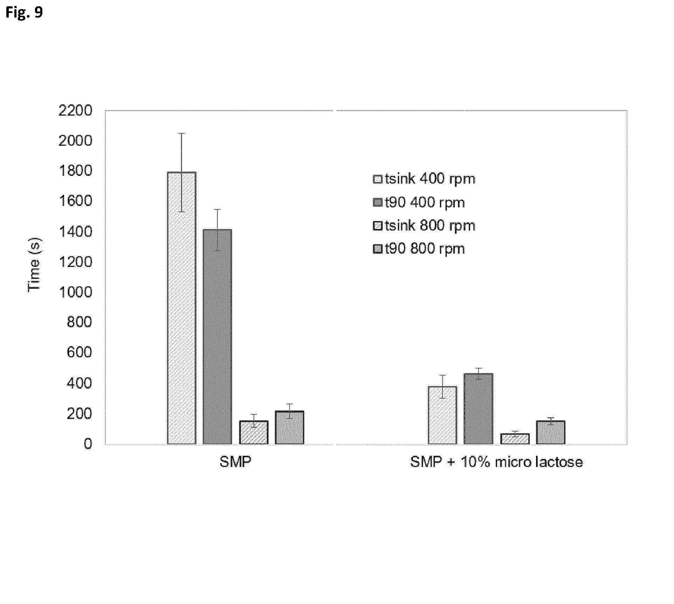

In the present example, medium heat skimmed milk powder (Arla, UK) was dry mixed with micronized α-lactose monohydrate. The same methods for mixing and reconstitution analysis as described in Example 1 were used. SMP was sieved in order to remove the fine particles and obtain a big size difference between the core and coating materials. The size distribution of SMP used in the present example is shown in Table 4. Table 3. SEM of pure SMP and the 10% coated powder are presented in Figure 8. The reconstitution results are presented in Figure 9.

**Table 3. Size distribution of SMP**

| | **SMP** |
|---|---|
| **d₁₀ (µm)** | 43 |
| **d₅₀ (µm)** | 72 |
| **d₉₀ (µm)** | 119 |

The effect of a higher d₅₀ particle size on the sinking time of SMP was also assessed. It was observed that at a d₅₀ particle size of 92 µm, the sinking time of SMP is below 70 seconds which makes the impact of adding carbohydrates on the surface less significant. When the free fat is higher (typically above 1%), sinking time is long at a wider range of particle sizes (see Example 6 with creamer).

### Example 5: Mixing of WMP with fine spray-dried lactose particles

For the preparation of fine spray-dried lactose, a 20% w/w aqueous lactose solution was prepared by dissolving lactose monohydrate in distilled water at ambient temperature and stirring for 30 min. A Mobile Minor spray dryer (GEA, Denmark) with a co-current two-fluid nozzle (1 mm diameter) was used for drying of the lactose solution. Before spray drying, the solution was heated to 70°C in a water bath. A peristaltic pump (Watson-Marlow 520U) with a four-roller head was used to push the liquid through a silicone tube (4.8 mm) with foam insulation (19 mm wall thickness) and onto the nozzle. The atomizing air pressure and flow rate used were 0.5 bar and 4.5 kg/h, respectively. The drying air flow rate was approximately 100 kg/h. The Tᵢₙₗₑₜ was 160°C and the Tₒᵤₜₗₑₜ was 90°C. The feed rate was within the 2.3 - 2.5 kg/h range (adjusted to control Tₒᵤₜₗₑₜ).

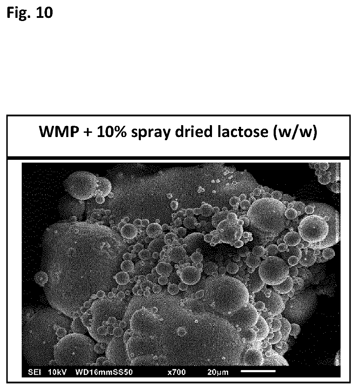

The size distribution of the spray-dried lactose is presented in Table 4. An SEM of the coated powder is presented in Figure 10.

**Table 4. Size distribution of spray-dried lactose powder**

| | **Spray-dried lactose** |
|---|---|
| **d₁₀ (µm)** | 4 |
| **d₅₀ (µm)** | 8 |
| **d₉₀ (µm)** | 16 |

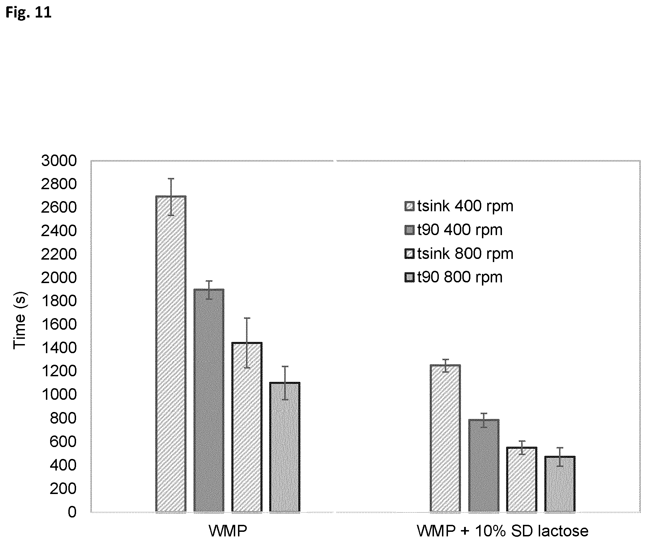

The reconstitution results obtained following the dry mixing of WMP with the fine spray-dried lactose are presented in Figure 11. Significant enhancement in the reconstitution of WMP as a result of the spray-dried lactose coating can be observed.

### Example 6: Mixing of dairy creamer with micronized α-lactose monohydrate

Dairy creamer was mixed with micronized α-lactose monohydrate in a bench-top fluidized bed granulator (University of Sheffield design). The two powders were mixed for 7 minutes using air at ambient temperature at a flow rate of 90 L/min. Four ratios of creamer/micronized lactose were applied: 95/5, 90/10, 85/15, 80/20 (w/w).

The size distribution of the creamer and micronized α-lactose monohydrate samples is presented in Table 5.

**Table 5. Size distribution of creamer and micronized α-lactose monohydrate**

| | **Creamer** | **Micronized α-lactose monohydrate** |
|---|---|---|
| **d₁₀ (µm)** | 96 | 4 |
| **d₅₀ (µm)** | 217 | 6 |
| **d₉₀ (µm)** | 336 | 10 |

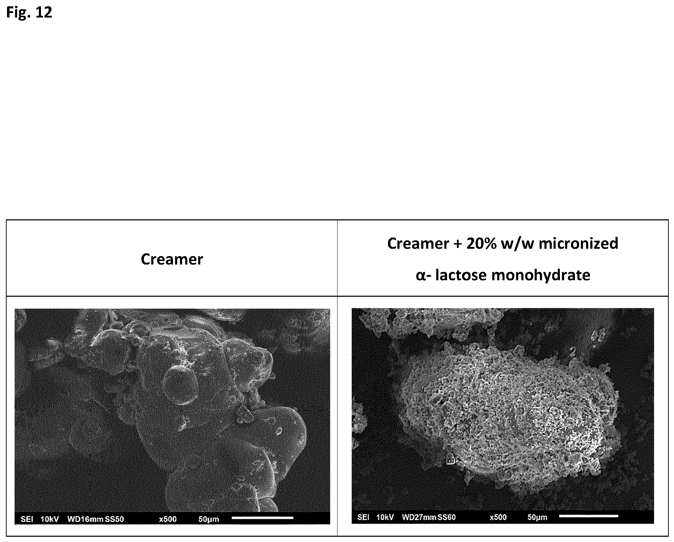

SEM of pure creamer and the creamer mixed with 20% micronized α-lactose monohydrate are presented in Figure 12. Full coverage of the creamer particle surface by micronized lactose can be observed in the case of the 20% sample.

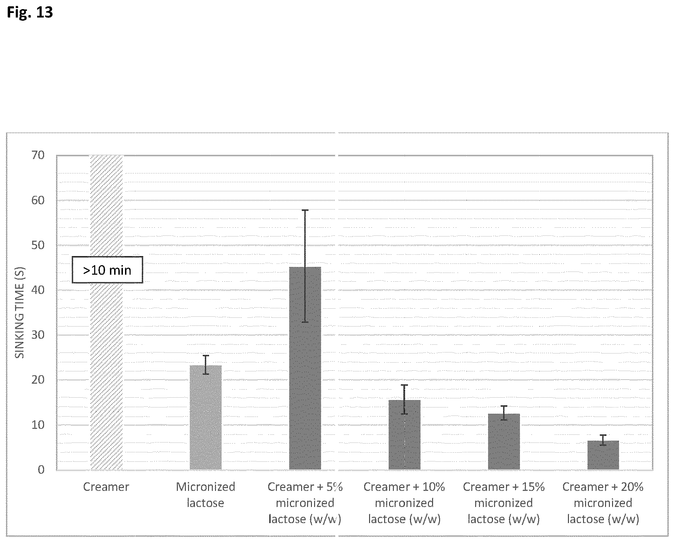

The wettability of pure creamer and the mixtures was evaluated by a static wetting-sinking test: 15g of powder were introduced instantly on the surface of 200 ml distilled water at 22 ± 3°C (no agitation applied). The sinking time of the different powders is presented in Figure 13.

### Example 7: Sinking times of WMP at 4°C

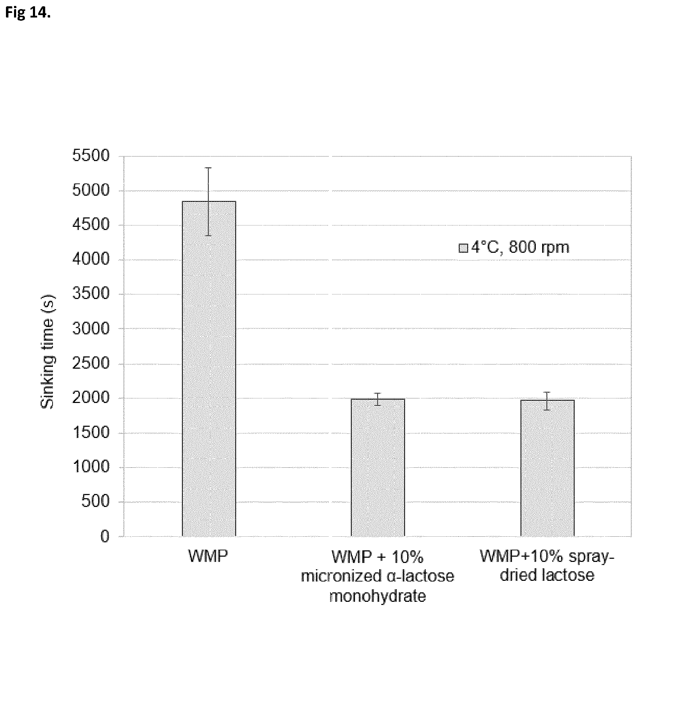

Examples 1 and 5 were repeated except that reconstitution was performed at 4°C. Addition of micronized α-lactose monohydrate on the surface of WMP also results in significant enhancement of sinking time at 4°C (Figure 14). Similar results are seen with the addition of spray dried lactose on the surface of WMP.

### Example 8: Mixing of WMP with coarse lactose at 22°C

A further experiment was performed to assess the effect of mixing WMP with lactose of approximately the same particle size. The same mixing method was used as with micronized lactose. WMP was mixed with coarse α-lactose monohydrate and with micronized α-lactose monohydrate in a food processor (diameter 20 cm) comprising a custom made 45° pitched 3-blade impeller. The mixing speed was approx. 120 rpm and the mixing time was 5 min.

The size distribution of the WMP, coarse α-lactose monohydrate and micronized α-lactose monohydrate is presented in Table 6.

**Table 6.**

| | **WMP** | **Coarse α-lactose monohydrate** | **Micronized α-lactose monohydrate** |
|---|---|---|---|
| **d₁₀ (µm)** | 30 | 36 | 4 |
| **d₅₀ (µm)** | 74 | 86 | 6 |
| **d₉₀ (µm)** | 140 | 148 | 10 |

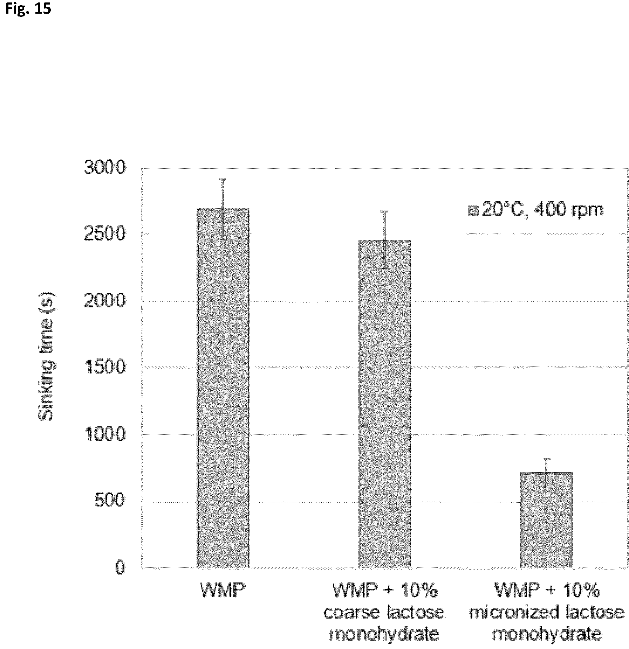

The sinking time of the different powders is presented in Figure 15.

### Example 9: Sinking time of vegan creamer mixed with micronized maltodextrins DE6/DE17-20 at 22°C

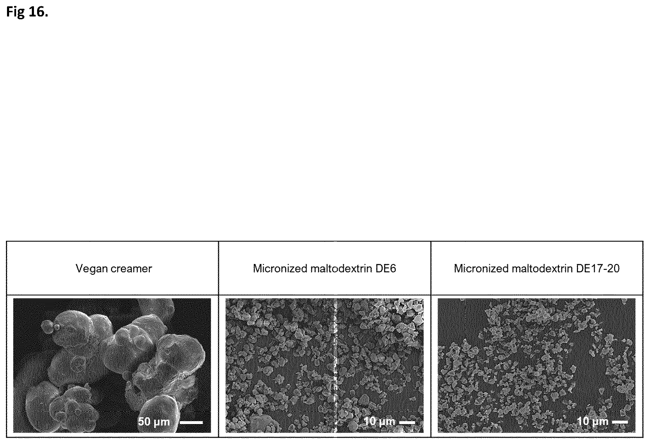

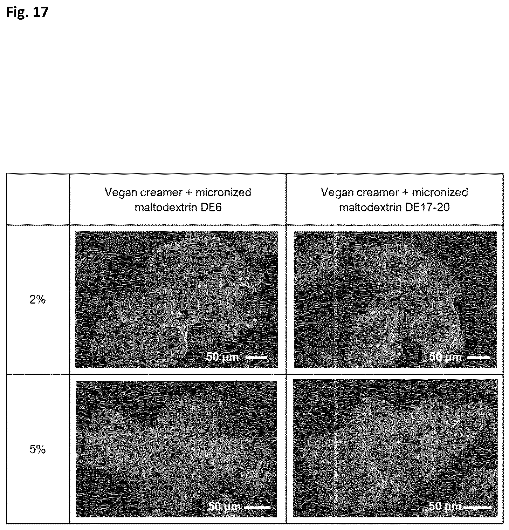

A vegan creamer with 2 ± 0.3% free fat content was dry mixed with micronized maltodextrin DE6 and DE17-20. Two ratios of vegan creamer/micronized maltodextrin were applied: 98/2 and 95/5 (% w/w). The same methods for mixing and reconstitution analysis as described in Example 1 were used. The particle size distribution of the vegan creamer and micronized maltodextrins is presented in Table 7. Scanning electron micrographs (SEM) of the pure vegan creamer and micronized maltodextrins are presented in Figure 16. SEM of the coated powders are presented in Figure 17.

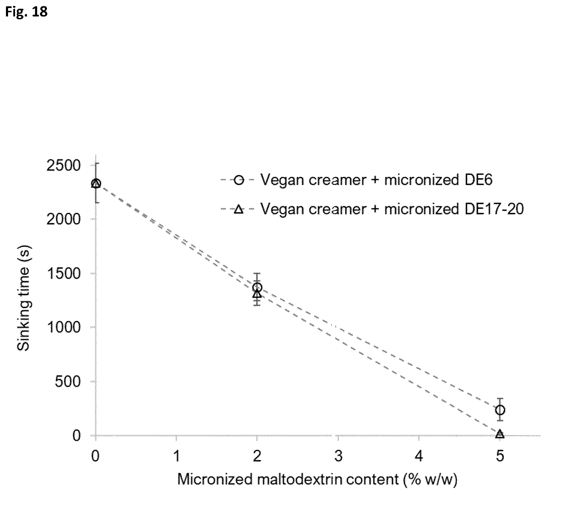

The sinking time of the uncoated and coated powders at 22°C and 400 rpm are presented in Figure 18.

**Table 7. Particle size distribution of vegan creamer, micronized maltodextrin DE6 and micronized maltodextrin DE17-20**

| | Vegan creamer | Micronized maltodextrin DE6 | Micronized maltodextrin DE17-20 |
|---|---|---|---|
| d₁₀ (µm) | 73 | 4 | 3 |
| d₅₀ (µm) | 156 | 6 | 5 |
| d₉₀ (µm) | 263 | 10 | 6 |

### Example 10: Sinking of vegan creamer mixed with micronized maltodextrin DE17-20 at 4°C

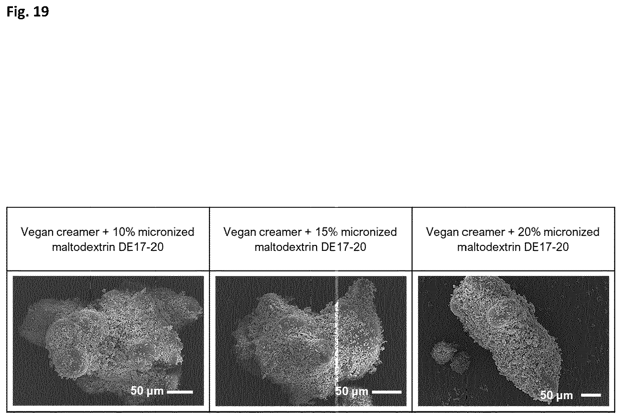

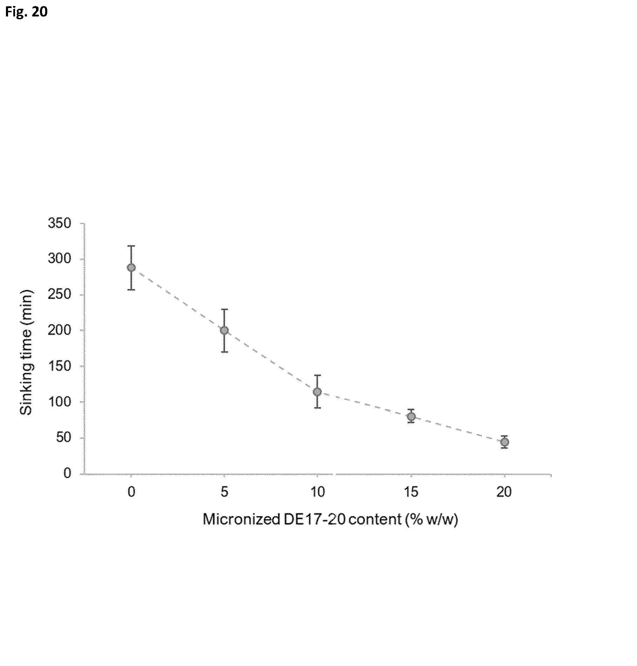

The same vegan creamer as in Example 9 was mixed with micronized maltodextrin DE17-20 at four different vegan creamer/micronized maltodextrin ratios: 95/5, 90/50, 85/15 and 80/20 (% w/w). The samples were reconstituted in deionized water at 4°C and 800 rpm, using the same setup as in Example 1. The particle size distribution of the powders is presented in Table 7. SEM images of the coated samples are presented in Figure 19. The sinking time results are presented in Figure 20.

## Claims

1. A powdered beverage composition comprising a hydrophobic powder and a crystalline powder, wherein
a. the hydrophobic powder and crystalline powder are present in a mass ratio of between 75:25 and 95:5,
b. the hydrophobic powder has a D₅₀ particle size of between 50 to 500 µm;
c. the crystalline powder has a D₅₀ particle size of between 1 to 10 µm, and wherein the crystalline powder is selected from one or more of lactose, galactose, glucose, sucrose, or derivatives thereof;
and wherein the particle size is measured by dynamic image analysis.

2. The powdered beverage composition according to claim 1, wherein the free fat content of the hydrophobic powder is between 0.01 - 2% w/w.

3. The powdered beverage composition according to claims 1 and 2, wherein the hydrophobic powder and the crystalline powder are present in a mass ratio of between 80:20 and 95:5.

4. The powdered beverage composition according to claims 1 to 3, wherein the hydrophobic powder and the crystalline powder are present in a mass ratio of about 90:10.

5. The powdered beverage composition according to claims 1 to 4, wherein the free fat content of the hydrophobic powder is between 0.01 to 0.2% w/w, and the D₅₀ particle size of the hydrophobic powder is between 65 to 75 µm.

6. The powdered beverage composition according to claims 1 to 5, wherein the free fat content of the hydrophobic powder is between 1.5 to 2% w/w, and the D₅₀ particle size of the hydrophobic powder is between 65 to 250 µm.

7. The powdered beverage composition according to claims 1 to 6, wherein the crystalline powder is selected from galactose, lactose, or dehydrated lactose, preferably α-lactose monohydrate.

8. The powdered beverage composition according to claim 7, wherein the hydrophobic powder further comprises lactose.

9. The powdered beverage composition according to claims 1 to 8, wherein the D₅₀ particle size of the crystalline powder is between 5 to 10 µm.

10. The powdered beverage composition according to claims 1 to 9, wherein the powdered beverage composition is a coffee mix.

11. A method of improving reconstitution of a hydrophobic powder in water, said method comprising dry mixing a hydrophobic powder with a crystalline powder, wherein
a. the hydrophobic powder and crystalline powder are dry-mixed in a mass ratio of between 75:25 and 95:5;
b. the hydrophobic powder has a D₅₀ particle size of between 50 to 500 µm;
c. the crystalline powder has a D₅₀ particle size of between 1 to 10 µm, wherein the crystalline powder is selected from one or more of lactose, galactose, glucose, sucrose, or derivatives thereof.

12. A method of improving cold reconstitution of a hydrophobic powder according to claim 11, wherein the hydrophobic powder and crystalline powder are present in a mass ratio of about 90:10.

13. A method of improving cold reconstitution of a hydrophobic powder according to claims 11 and 12, wherein the water has a temperature of less than 45°C, preferably less than 25°C, most preferably less than 10°C.

14. Use of a crystalline powder for improving the cold reconstitution of hydrophobic powders, wherein
a. the hydrophobic powder and crystalline powder are present in a mass ratio of between 75:25 and 95:5,
b. the hydrophobic powder has a D₅₀ particle size of between 50 to 500 µm;
c. the crystalline powder has a D₅₀ particle size of between 1 to 10 µm, and is selected from one or more of lactose, galactose, glucose, sucrose, or derivatives thereof.

15. Use of lactose or galactose powder for improving the cold reconstitution of hydrophobic powder according to claim 14, wherein the hydrophobic powder and crystalline powder are present in a mass ratio of about 90:10.

## Patentansprüche

1. Pulverförmige Getränkezusammensetzung, umfassend ein hydrophobes Pulver und ein kristallines Pulver, wobei
a. das hydrophobe Pulver und kristalline Pulver in einem Massenverhältnis zwischen 75 : 25 und 95 : 5 vorliegen,
b. das hydrophobe Pulver eine D₅₀-Partikelgröße zwischen 50 und 500 µm aufweist;
c. das kristalline Pulver eine D₅₀-Partikelgröße zwischen 1 bis 10 µm aufweist, und wobei das kristalline Pulver aus einem oder mehreren von Lactose, Galactose, Glucose, Sucrose oder Derivaten davon ausgewählt ist;
und wobei die Partikelgröße durch dynamische Bildanalyse gemessen wird.

2. Pulverförmige Getränkezusammensetzung nach Anspruch 1, wobei der freie Fettgehalt des hydrophoben Pulvers zwischen 0,01 - 2 Gew.-% liegt.

3. Pulverförmige Getränkezusammensetzung nach den Ansprüchen 1 und 2, wobei das hydrophobe Pulver und das kristalline Pulver in einem Massenverhältnis zwischen 80 : 20 und 95 : 5 vorliegen.

4. Pulverförmige Getränkezusammensetzung nach den Ansprüchen 1 bis 3, wobei das hydrophobe Pulver und das kristalline Pulver in einem Massenverhältnis von etwa 90 : 10 vorliegen.

5. Pulverförmige Getränkezusammensetzung nach den Ansprüchen 1 bis 4, wobei der freie Fettgehalt des hydrophoben Pulvers zwischen 0,01 bis 0,2 Gew.-% liegt und die D₅₀-Partikelgröße des hydrophoben Pulvers zwischen 65 bis 75 µm liegt.

6. Pulverförmige Getränkezusammensetzung nach den Ansprüchen 1 bis 5, wobei der freie Fettgehalt des hydrophoben Pulvers zwischen 1,5 bis 2 Gew.-% liegt und die D₅₀-Partikelgröße des hydrophoben Pulvers zwischen 65 bis 250 µm liegt.

7. Pulverförmige Getränkezusammensetzung nach den Ansprüchen 1 bis 6, wobei das kristalline Pulver aus Galactose, Lactose oder dehydratisierter Lactose, vorzugsweise α-Lactose-Monohydrat ausgewählt ist.

8. Pulverförmige Getränkezusammensetzung nach Anspruch 7, wobei das hydrophobe Pulver ferner Lactose umfasst.

9. Pulverförmige Getränkezusammensetzung nach den Ansprüchen 1 bis 8, wobei die D₅₀-Partikelgröße des kristallinen Pulvers zwischen 5 bis 10 µm liegt.

10. Pulverförmige Getränkezusammensetzung nach den Ansprüchen 1 bis 9, wobei die pulverförmige Getränkezusammensetzung eine Kaffeemischung ist.

11. Verfahren zur Verbesserung der Rekonstitution eines hydrophoben Pulvers in Wasser, wobei das Verfahren das Trockenmischen eines hydrophoben Pulvers mit einem kristallinen Pulver umfasst, wobei
a. das hydrophobe Pulver und kristalline Pulver in einem Massenverhältnis zwischen 75 : 25 und 95 : 5 trockengemischt werden;
b. das hydrophobe Pulver eine D₅₀-Partikelgröße zwischen 50 und 500 µm aufweist;
c. das kristalline Pulver eine D₅₀-Partikelgröße zwischen 1 bis 10 µm aufweist, wobei das kristalline Pulver aus einem oder mehreren von Lactose, Galactose, Glucose, Sucrose oder Derivaten davon ausgewählt ist.

12. Verfahren zur Verbesserung der Kaltrekonstitution eines hydrophoben Pulvers nach Anspruch 11, wobei das hydrophobe Pulver und kristalline Pulver in einem Massenverhältnis von etwa 90 : 10 vorliegen.

13. Verfahren zur Verbesserung der Kaltrekonstitution eines hydrophoben Pulvers nach den Ansprüchen 11 und 12, wobei das Wasser eine Temperatur von weniger als 45 °C aufweist, vorzugsweise weniger als 25 °C, am meisten bevorzugt weniger als 10 °C.

14. Verwendung eines kristallinen Pulvers zur Verbesserung der Kaltrekonstitution von hydrophoben Pulvern, wobei
a. das hydrophobe Pulver und kristalline Pulver in einem Massenverhältnis zwischen 75 : 25 und 95 : 5 vorliegen,
b. das hydrophobe Pulver eine D₅₀-Partikelgröße zwischen 50 und 500 µm aufweist;
c. das kristalline Pulver eine D₅₀-Partikelgröße zwischen 1 bis 10 µm aufweist und aus einem oder mehreren von Lactose, Galactose, Glucose, Sucrose oder Derivaten davon ausgewählt ist.

15. Verwendung von Lactose- oder Galactosepulver zur Verbesserung der Kaltrekonstitution von hydrophobem Pulver nach Anspruch 14, wobei das hydrophobe Pulver und kristalline Pulver in einem Massenverhältnis von etwa 90 : 10 vorliegen.

## Revendications

1. Composition de boisson en poudre comprenant une poudre hydrophobe et une poudre cristalline, dans laquelle
a. la poudre hydrophobe et la poudre cristalline sont présentes dans un rapport de masse compris entre 75:25 et 95:5,
b. la poudre hydrophobe a une taille de particule D₅₀ comprise entre 50 et 500 µm ;
c. la poudre cristalline a une taille de particule D₅₀ comprise entre 1 et 10 µm, et dans laquelle la poudre cristalline est choisie parmi un ou plusieurs parmi du lactose, du galactose, du glucose, du saccharose ou des dérivés de ceux-ci ;
et dans laquelle la taille de particule est mesurée par analyse dynamique d'image.

2. Composition de boisson en poudre selon la revendication 1, dans laquelle la teneur en matières grasses libres de la poudre hydrophobe est comprise entre 0,01 et 2 % p/p.

3. Composition de boisson en poudre selon les revendications 1 et 2, dans laquelle la poudre hydrophobe et la poudre cristalline sont présentes dans un rapport de masse compris entre 80:20 et 95:5.

4. Composition de boisson en poudre selon les revendications 1 à 3, dans laquelle la poudre hydrophobe et la poudre cristalline sont présentes dans un rapport de masse d'environ 90:10.

5. Composition de boisson en poudre selon les revendications 1 à 4, dans laquelle la teneur en matières grasses libres de la poudre hydrophobe est comprise entre 0,01 et 0,2 % p/p, et la taille de particule D₅₀ de la poudre hydrophobe est comprise entre 65 et 75 µm.

6. Composition de boisson en poudre selon les revendications 1 à 5, dans laquelle la teneur en matières grasses libres de la poudre hydrophobe est comprise entre 1,5 et 2 % p/p, et la taille de particule D₅₀ de la poudre hydrophobe est comprise entre 65 et 250 µm.

7. Composition de boisson en poudre selon les revendications 1 à 6, dans laquelle la poudre cristalline est choisie parmi du galactose, du lactose ou du lactose déshydraté, de préférence du α-lactose monohydraté.

8. Composition de boisson en poudre selon la revendication 7, dans laquelle la poudre hydrophobe comprend en outre du lactose.

9. Composition de boisson en poudre selon les revendications 1 à 8, dans laquelle la taille de particule D₅₀ de la poudre cristalline est comprise entre 5 et 10 µm.

10. Composition de boisson en poudre selon les revendications 1 à 9, dans laquelle la composition de boisson en poudre est un mélange de café.

11. Procédé d'amélioration de reconstitution d'une poudre hydrophobe dans l'eau, ledit procédé comprenant le mélange à sec d'une poudre hydrophobe avec une poudre cristalline, dans lequel
a. la poudre hydrophobe et la poudre cristalline sont mélangées à sec dans un rapport de masse compris entre 75:25 et 95:5 ;
b. la poudre hydrophobe a une taille de particule D₅₀ comprise entre 50 et 500 µm ;
c. la poudre cristalline a une taille de particule D₅₀ comprise entre 1 et 10 µm, dans lequel la poudre cristalline est choisie parmi un ou plusieurs parmi du lactose, du galactose, du glucose, du saccharose ou des dérivés de ceux-ci.

12. Procédé d'amélioration de reconstitution à froid d'une poudre hydrophobe selon la revendication 11, dans lequel la poudre hydrophobe et la poudre cristalline sont présentes dans un rapport de masse d'environ 90:10.

13. Procédé d'amélioration de reconstitution à froid d'une poudre hydrophobe selon les revendications 11 et 12, dans lequel l'eau a une température inférieure à 45 °C, de préférence inférieure à 25 °C, le plus préférablement inférieure à 10 °C.

14. Utilisation d'une poudre cristalline destinée à améliorer la reconstitution à froid de poudres hydrophobes, dans laquelle
a. la poudre hydrophobe et la poudre cristalline sont présentes dans un rapport de masse compris entre 75:25 et 95:5,
b. la poudre hydrophobe a une taille de particule D₅₀ comprise entre 50 et 500 µm ;
c. la poudre cristalline a une taille de particule D₅₀ comprise entre 1 et 10 µm et est choisie parmi un ou plusieurs parmi du lactose, du galactose, du glucose, du saccharose ou des dérivés de ceux-ci.

15. Utilisation de lactose ou de galactose en poudre destinée à améliorer la reconstitution à froid de la poudre hydrophobe selon la revendication 14, dans laquelle la poudre hydrophobe et la poudre cristalline sont présentes dans un rapport de masse d'environ 90:10.
